# EUROPÄISCHE PATENTANMELDUNG

(11) **EP 3 118 741 A1**
(43) Veröffentlichungstag der Anmeldung: **18.01.2017**
(21) Anmeldenummer: 15176835.5
(22) Anmeldetag: 15.07.2015
(51) Int. Cl.: G06F 9/50, G06F 1/32, G06Q 30/00, H04L 29/08

(54) **VERFAHREN, VORRICHTUNG UND SYSTEM ZUM ENERGIEEFFIZIENTEN AUSLASTEN VON RECHENEINHEITEN**

(71) Anmelder: Deutsche Telekom AG, 53113 Bonn (DE)
(72) Erfinder: LANGE, Christoph, 10318 Berlin (DE); KOSIANKOWSKI, Dirk, 15732 Eichwalde (DE)
(74) Vertreter: Vossius & Partner Patentanwälte Rechtsanwälte mbB

(57) **Zusammenfassung**

Die vorliegende Erfindung betrifft ein Verfahren, welches es erlaubt in Abhängigkeit von in einem Rechennetz jeweils lokal erzeugter Energie Rechenbefehle von Recheneinheiten ausführen zu lassen, die jeweils über eine ausreichende Menge an Energie verfügen. So sind an das Rechennetz Energiequellen angeschlossen, welche beispielsweise emeuerbare Energie in elektrischen Strom umwandeln und lokal in das Netzwerk einspeisen. Die Recheneinheiten werden dann bevorzugt dort angesprochen, wo ausreichend Energie vorhanden ist, ohne dass neue Energiequellen hochgefahren werden müssen.

## Beschreibung

Die vorliegende Erfindung betrifft ein Verfahren, welches es erlaubt in Abhängigkeit von in einem Rechennetz jeweils lokal erzeugter Energie Rechenbefehle von Recheneinheiten ausführen zu lassen, die jeweils am eigenen Standort über eine ausreichende Menge an Energie verfügen. So sind an das Rechennetz Energiequellen angeschlossen, welche beispielsweise erneuerbare Energie als elektrischen Strom lokal in das Netzwerk einspeisen. Die Recheneinheiten werden dann bevorzugt dort angesprochen, wo ausreichend Energie vorhanden ist, ohne dass neue Energiequellen hochgefahren werden müssen. Analog wird geprüft, ob an den einzelnen Recheneinheiten genügend Hardwarekapazitäten vorhanden sind, damit keine zusätzlichen Recheneinheiten beansprucht werden müssen. Somit findet erfindungsgemäß zusätzlich eine intelligente Lastverteilung bezüglich vorhandener Rechenkapazitäten statt. Es wird auch eine Steuervorrichtung sowie ein System aufweisend diese Steuereinrichtung vorgeschlagen.

CN 103677957 A (Anmeldenummer 201310687502) beschreibt eine Metrik und einen Algorithmus zur Lastverteilung innerhalb eines Netzwerks.

CN 103559084 A (Anmeldenummer 201310487895) beschreibt ein energieschonendes Migrieren einer virtuellen Maschine mit entsprechender Migrationsmetrik. Hierbei wird zwischen physischen und virtuellen Recheneinheiten unterschieden und eine Lastverteilung in Abhängigkeit der Rechenkapazität durchgeführt.

CN 102929687 A (Anmeldenummer 201210385961) beschreibt ebenfalls, ein energieschonendes Migrieren einer virtuellen Maschine von einem Rechenzentrum an ein weiteres Rechenzentrum

In heutigen Telekommunikationsnetzen werden hochspezialisierte Systeme zur Übertragung und Verarbeitung des zu bewältigenden Datenverkehrs eingesetzt. Diese sind in Betriebsstellengebäuden (BSt) und an Außenstandorten in entsprechenden Gehäusen untergebracht. Die Energieversorgung dieser Netztechnik erfolgt vorwiegend über klassische Energieversorgungsnetze. Betriebsstellen sind darüber hinaus mit Netzersatzanlagen und Bleiakkumulatoren ausgestattet, um Zeiten von Ausfällen der Energieversorgung überbrücken zu können. Die Verarbeitung von Daten und Ausführung von Netzfunktionen ist derzeit stark standortgebunden.

Der fortschreitende Stand der Technik bezüglich Netzentwicklung lässt erwarten, dass Telekommunikationsnetz-Betriebsstellen sich zukünftig in zwei Richtungen weiterentwickeln: Einerseits telekommunikationsseitig von spezialisierten Systemen für spezielle Funktionen hin zu Mehrzwecksystemen, auf denen unterschiedliche Netzfunktionen ausgeführt werden können, also in Richtung von Technik, die heute vorwiegend in Rechenzentren eingesetzt wird, und andererseits energieversorgungsseitig von klassischer Energieversorgung durch die Energieversorgungsunternehmen hin zu graduell autarker Eigenstrom- und Eigenwärmeversorgung.

Diese beobachtbaren und erwarteten Trends und Entwicklungen liegen der vorliegenden Erfindung zu Grunde. Es wird ein Verfahren vorgestellt, das den zukünftigen wirtschaftlichen und flexiblen technischen Betrieb von Telekommunikationsnetzen mit Energieversorgungsaspekten ganzheitlich verknüpft.

In bekannten Telekommunikationsnetzen sind Funktionen, die zum Beispiel den Netzzugang, damit verbundene Autorisierungs-Mechanismen oder die Wahl der Wege für die Übertragung von Daten im Netz betreffen können, sehr stark an die jeweiligen Systeme (Hardware) gebunden und werden zumeist lokal ausgeführt, wie zum Beispiel ein Treffen von Routingentscheidungen in Routern. Ein aktueller Trend der "Network Function Virtualization" weist in die Richtung, dass diese Bindung von spezifischen Funktionen an spezialisierte Hardware gelockert bzw. aufgehoben werden kann: Dann werden Funktionen in virtualisierten Umgebungen, in "Virtual Machines (VMs)", auf Mehrzweck-Hardware-Systemen ähnlich der üblichen IT-Rechentechnik, wie Standard-Servern, ausgeführt. Netzbetreiber erhoffen sich davon Kostenersparnisse und flexiblere Netzgestaltung und - konfiguration (Software Defined Networks, SDN), um schneller auf sich ändernde Anforderungen und Bedürfnisse reagieren zu können.

Darüber hinaus gibt es derzeit Möglichkeiten, VMs zwischen unterschiedlichen Rechnern und Rechenzentren dynamisch umziehen und "migrieren" zu lassen. Diese Migration von VMs bezieht sich derzeit ganz überwiegend auf Rechenaufgaben. So können beispielsweise umfangreiche Rechenaufgaben auf verteilten Privatrechnern ausgeführt werden, wenn diese temporär wenig oder nicht genutzt werden. In größerem und kommerziellem Maßstab werden Techniken der VM-Migration zwischen Rechenzentren genutzt, um Rechenzentren anforderungsgemäß gut auszulasten.

Des Weiteren ist insbesondere in Deutschland der Trend zur Verwendung erneuerbarer aber volatilerer Elektroenergiequellen, wie Wind- und Solarenergie, zu erkennen die an immer mehr Standorten ans Energienetz angeschlossen werden, also eine dezentrale Einspeisung. Insbesondere die erneuerbaren Energien (Photovoltaik, Wind und Wasser) erleben einen Aufschwung, führen aber zu neuen Anforderungen und auch Möglichkeiten bei der Elektroenergieversorgung. So variiert die bereitstehende Elektroenergie zeitlich und räumlich. Durch entsprechendes Inzentiveren und die Belohnung der Eigennutzung erneuerbarer Energiequellen werden auch für Telekommunikationsnetzbetreiber die Rahmenbedingungen für die lokale Erzeugung der benötigten Energie, also zur Eigenversorgung, und die bestehenden lokalen Speichermöglichkeiten (Notstrom-Akkumulatoren) neu gesetzt. Die wirtschaftliche Nutzung derartiger Systeme und sich daraus ergebende neue Freiheitsgrade sind Inhalt aktueller Forschungsarbeiten.

Die vorliegende Erfindung hat unter anderem das Ziel den Stand der Technik derart fortzubilden, dass es möglich ist, unter Berücksichtigung von Randbedingungen hinsichtlich der Verfügbarkeit und des Preises von elektrischer Energie virtuelle Maschinen zur Berechnung von Netzfunktionen so räumlich zu migrieren und ausführen zu lassen, dass der Energiebedarf und dessen Kosten minimiert werden. Außerdem können die IT-Ressourcen in den Betriebsstellen zur Nutzung angeboten und damit vorteilhaft hoch ausgelastet werden. Des Weiteren lassen sich in dem Konzept freie Batteriekapazitäten der Betriebsstellen anderen Marktteilnehmern zur Bereitstellung von Regelenergie (Primär-, Sekundär-, Minutenreserve) anbieten. Ebenso kann in der Telekommunikationsnetzbetriebsstelle erzeugte Energie, wie Elektroenergie und ggf. Wärme, die dort nicht selbst benötigt wird und verbraucht werden kann, an andere Energiekonsumenten abgegeben werden. Dazu bietet die vorliegende Erfindung ein geeignetes Verfahren, das auch weiteren Konsumenten verfügbare Energie anbietet, welche nicht von den Recheneinheiten aufgebraucht wird.

Es ist daher eine Aufgabe der vorliegenden Erfindung ein verbessertes Verfahren bereitzustellen, welches sowohl eine Lastverteilung bezüglich vorhandener Energie als vorhandener Rechenkapazitäten veranlasst. Hierbei soll es möglich sein, innerhalb eines geographisch verteilten Rechnernetzes die anstehenden Rechenaufgaben dort zu lösen, wo gerade in geeigneter Weise Energie bereitsteht. Weiterhin sollen auch Netzwerkparameter berücksichtigt werden können, beispielsweise um Antwortzeiten der Recheneinheiten abschätzen zu können. Es ist ferner eine Aufgabe der vorliegenden Erfindung eine entsprechend eingerichtete Vorrichtung und ein System aufweisend diese Vorrichtung bereitzustellen.

Die Aufgabe wird gelöst durch den Gegenstand der Patentansprüche.

Demgemäß ist ein Verfahren zum energieeffizienten Auslasten von Recheneinheiten in einem verteilten Rechennetz vorgesehen, mit den Schritten eines Bestimmens jeweils einer an das Rechennetz bereitgestellten Energiemenge von Energiequellen durch die das Rechennetz versorgt wird und eines Bestimmens einer Rechenkapazität jeweils einer Recheneinheit. Ferner erfolgt ein Adressieren der einzelnen Recheneinheiten mittels bereitgestellter Steuerbefehle in Abhängigkeit der jeweils an den Recheneinheiten vorhandenen Energiemenge und der vorhandenen Rechenkapazität.

An das Rechennetz sind Energiequellen angeschlossen, welche den Recheneinheiten des Rechennetzes Energie in Form von Strom bereitstellen. Das Verfahren ist auch für Telekommunikationsnetz- spezifische Funktionen geeignet, die aber derart virtualisiert werden, dass sie von üblichen Rechennetzen ausgeführt werden können. Rechenbefehle umfasst hierbei auch Datenverarbeitungsbefehle, um z.B. Datenpakete zu analysieren, bearbeiten und geeignet weiterzuleiten. Der Begriff Recheneinheiten bezieht sich auch auf virtuelle Maschinen VMs.

Das Rechennetz wird z.B. geformt durch diverse Recheneinheiten, welche netzwerktechnisch verbunden sind. Somit umfasst das Rechennetz Recheneinheiten mitsamt Kommunikationsverbindungen, welche zumindest indirekt die Recheneinheiten kommunikativ koppeln. Beispielsweise sind die Recheneinheiten an das Internet angeschlossen. Die jeweiligen Energiequellen sind indirekt derart an das Rechennetz gekoppelt, dass diese den Recheneinheiten Energie bereitstellen. Somit ist nicht zwingendermaßen eine physische Kopplung der Energiequellen an das Rechennetz vorgesehen, sondern die Energiequellen können ein eigenes Stromnetz ausbilden, welches sich zumindest teilweise mit dem vorgesehenen Rechennetz überschneidet. Da jede Recheneinheit über mindestens eine Energiequelle verfügen muss, stellt das Stromnetz an den jeweiligen Knotenpunkten des Rechennetzes Energie bereit. Hierbei ist es besonders vorteilhaft, dass in einzelnen Regionen des Rechennetzes, welches zumindest teilweise mit dem zugrunde liegenden Stromnetz übereinstimmt, besonders hohe Energieaufkommen vorhanden sind. Beispielsweise wird in dem Stromnetz in einer südlichen Region zu einem bestimmten Zeitpunkt besonders viel Sonnenenergie in das Stromnetz, somit indirekt in das Rechennetz, eingespeist. Somit können Rechenaufgaben in dieser Region gelöst werden, was einen erhöhten Stromverbrauch in dieser Region impliziert. Somit fungieren die Recheneinheiten als Energiesenken und die Energiequellen als Energieerzeuger. Sind nunmehr Steuerbefehle auszuführen, so können diese in jeweils der Region des Rechennetzes ausgeführt werden, in der besonders viel Energie zur Verfügung steht.

In einem weiteren Beispiel ist in einer nördlichen Region eines Rechennetzes besonders viel Windenergie verfügbar. Diese Windenergie wird in der nördlichen Region in das Stromnetz bzw. indirekt in das Rechennetz eingespeist, wobei es vorteilhaft ist, abzuarbeitende Steuerbefehle in dieser nördlichen Region abarbeiten zu lassen. Somit erfolgt eine Lastverteilung bezüglich der auszuführenden Steuerbefehle derart, dass immer die Recheneinheiten in einer Teilregion bzw. einem Teilabschnitt des Stromnetzes angesteuert werden, in dem derzeit besonders viel Energie vorhanden ist. Somit ist es innerhalb eines Rechennetzes möglich, mehrere Abschnitte zu definieren, welche besonders bezüglich deren Hardware-Kapazitäten ausgelastet werden und implizit andere Abschnitte des Rechennetzes auszuwählen, welche Hardware-Kapazitäten zurückhalten bzw. abschalten. Dies kann auch dynamisch zur Laufzeit eines Abarbeitens von Steuerbefehlen derart ausgeführt werden, dass sich eine dynamische Lastverteilung über das Netzwerk ergibt.

Eine Lastverteilung kann im Allgemeinen bezüglich einer vorhandenen Energiemenge aber auch bezüglich einer vorhandenen Rechenkapazität verstanden werden. Somit erfolgt implizit auch eine Lastverteilung bezüglich der Rechenkapazität des Rechennetzes. So wird bestimmt, in welchem Abschnitt des Rechennetzes besonders viel Rechenkapazität vorhanden ist und dann bevorzugt auch dieser Abschnitt des Rechennetzes adressiert, um eine Abarbeitung der Steuerbefehle zu veranlassen. Auch kann eine Rückkopplung zwischen einer vorhandenen Energiekapazität und einer vorhandenen Rechenkapazität derart verfolgen, dass nur jeweils bereits in Betrieb genommene Hardware-Ressourcen weiterhin bezüglich der Abarbeitung der Steuerbefehle verwendet werden. Somit wird die vorhandene Rechenkapazität evaluiert und es müssen keine weiteren Rechenkapazitäten hinzu geschaltet werden, was wiederum einen erhöhten Energieverbrauch mit sich führen würde. Ist in einem bestimmten Abschnitt des Rechennetzes nicht genügend Rechenkapazität vorhanden, so ist unter Berücksichtigung der vorhandenen Energiemenge abzuwägen, ob weitere Rechenkapazitäten in diesem Abschnitt hinzu geschaltet werden, was wiederum Energieverbrauch mit sich führt, oder ob einfach ein anderer Abschnitt des Rechennetzes adressiert wird, an dem sowohl genügend Rechenkapazität als auch genügend Energiekapazität bereit steht.

Ein Adressieren der einzelnen Recheneinheiten mittels bereitgestellter Steuerbefehle kann also gemäß einem Aspekt der vorliegenden Erfindung derart verstanden werden, dass eine vorhandene Anzahl an Steuerbefehlen, also ein abzuarbeitender Befehlssatz, wie z.B. ein Steuerungsalgorithmus von den Recheneinheiten ausgeführt werden muss. Somit übernehmen die Recheneinheiten, nachdem sie adressiert wurden, die Ausführung der Steuerbefehle. Bei den Steuerbefehlen handelt es sich somit um Anweisungen an die Recheneinheiten, um ein bestimmtes Systemverhalten herbeizuführen. Bei den Steuerbefehlen kann es sich beispielsweise um ein Abarbeiten von Datenbankbefehlen, ein Abarbeiten von Kommunikationsdienstanweisungen oder das Beziehen von Datenmengen handeln. Der Fachmann erkennt hierbei weitere Arten von Steuerbefehlen, welche ebenfalls mittels Adressierung der Recheneinheiten ausgeführt werden können.

Ferner ist es erfindungsgemäß möglich, stets mehrere Recheneinheiten, also einen Abschnitt des Rechennetzes, anzusprechen. Hierbei ist es möglich die Recheneinheiten derart zusammenzuschalten, dass diese gemeinsam eine bestimmte Anzahl an Rechenbefehlen abarbeiten. Beispielsweise ist es möglich, eine Netzwerkregion bzw. einen Netzwerkabschnitt derart zu wählen, dass dieser mehrere Recheneinheiten aufweist. Dies kann mittels einer Klassifizierung oder einem Clustering erfolgen. Beispielsweise ist das Netzwerk derart zu unterteilen, dass sich einzelne Abschnitte bzw. Cluster von Recheneinheiten bilden, die jeweils das Vorhandensein einer bestimmten Energiemenge ausnutzen. So kann das verteilte Rechennetz derart unterteilt werden, dass sich Regionen mit einer bestimmten Submenge von Recheneinheiten herausbilden, derart, dass in einer ersten Region eine hohe Energiemenge bereitsteht und in einer zweiten Region eine niedrige Energiemenge bereitsteht. Somit würden priorisiert die Recheneinheit der Region mit viel Energie adressiert werden. Das verteilte Rechennetz kann in eine beliebige Anzahl von Abschnitten unterteilt werden, derart dass in einer bestimmten Anzahl von Gebieten Steuerbefehle abgearbeitet werden und in den weiteren Abschnitten keine Steuerbefehle abgearbeitet werden. Auch die Unterteilung der Recheneinheiten des verteilten Netzes erfolgt dynamisch derart, dass sich bei einer Verschiebung der verfügbaren Energie innerhalb des Netzes auch die entsprechenden Abschnitte entsprechend mit umverteilen. Auch können beliebig viele Klassen von Netzwerkabschnitten derart gebildet werden, dass eine erste Klasse einen Netzwerkabschnitt mit viel Energie formt, eine zweite Klasse einen Netzwerkabschnitt mit stark schwankender Energieverfügbarkeit formt und eine dritte Klasse einen Abschnitt mit wenig verfügbarer Energie formt. Somit können also diverse unterschiedliche Klassen gebildet werden, welche jeweils Energieverhältnisse innerhalb dieses Abschnitts klassifizieren.

Die bereitgestellten Steuerbefehle können auch derart unterteilt werden, dass diese in mehreren Netzwerkabschnitten jeweils mittels einer Teilmenge von Steuerbefehlen abgearbeitet werden. So ist es möglich, die bereitgestellten Steuerbefehle in allen Abschnitten des Rechennetzes abzuarbeiten, wobei jedoch priorisierten Abschnitten besonders viele Steuerbefehle zukommen und niedrig priorisierten Abschnitten wenige Steuerbefehle zukommen. Somit werden also Rechenaufgaben verteilt über das gesamte Rechennetz unter einer optimalen Ausnutzung der vorhandenen Energie- und Rechenkapazität abgearbeitet. Ein Bestimmen von einer Energiemenge bzw. einer Rechenkapazität kann beispielsweise mittels Ausmessen oder Auslesen von Datensätzen erfolgen. So können beispielsweise sowohl die Energiequellen als auch die Recheneinheiten und Steuerbefehle über Profile verfügen, welche jeweils in einem Datenspeicher hinterlegt sind und deren Eigenschaften beschreiben. Beispielsweise kann dynamisch ausgemessen werden, wieviel Energie eine bestimmte Energiequelle bereitstellt. Ferner kann ein Profil von Steuerbefehlen hinterlegt werden, welches beschreibt, wie rechenintensiv die jeweiligen Steuerbefehle sind. Ein solches Anforderungsprofil der Steuerbefehle kann dann mit einem bereitgestellten Profil der Recheneinheiten abgeglichen werden und somit kann bestimmt werden, welche Recheneinheiten insgesamt dem Anforderungsprofil der Steuerbefehle entsprechen. Somit erfolgt auch eine Lastverteilung innerhalb des verteilten Rechennetzes bezüglich vorhandener Hardware-Ressourcen.

Hierbei ist es besonders vorteilhaft auch Charakteristika des zugrunde liegenden Netzwerks, d.h., der Datenverbindung zu berücksichtigen. So erzeugt ein Verteilen von Rechenaufgaben innerhalb des verteilten Netzwerks einen sogenannten Overhead, also Steuerbefehle, welche lediglich der Netzwerkkommunikation dienen, welche nicht direkt zum Abarbeiten der Steuerbefehle beitragen. Somit kann es wiederum notwendig sein bestimmte Steuerbefehle möglichst gebündelt zentral abzuarbeiten, ohne diese weitläufig im Netzwerk zu verteilen. Solche Netzwerkparameter können wiederum dynamisch ausgelesen werden, beispielsweise mittels eines Überprüfens einer verfügbaren Bandbreite innerhalb des Netzwerks oder auch mittels eines Netzwerkprofils bereitgestellt werden. Auch können die Steuerbefehle derart beschrieben werden, dass erkennbar ist, ob es sich um eine Echtzeitanwendung handelt, oder ob das Bereitstellen eines Rechenergebnisses unabhängig bezüglich einer vorgegebenen Zeit ist. So kann es vorteilhaft sein, besonders zeitkritische Anwendungen möglichst zentral abzuarbeiten, während, falls der Zeitpunkt des Abschließens des Abarbeitens der Steuerbefehle keine große Rolle spielt, die Steuerbefehle auch weitläufig in Abhängigkeit der vorhandenen Energiemenge über das Netzwerk zu verteilen. Hierzu ist es möglich bei einem Kommunikationsdienstleister entsprechende Netzwerkparameter anzufragen. Solche Netzwerkparameter können beispielsweise eine verfügbare Bandbreite oder auch die Stabilität der vorhandenen Internetverbindung sein.

Das verteilte Rechennetz kann beispielsweise ein Mobilfunknetz aufweisen, in dem die Kommunikationsschnittstellen instabil sind. Hierbei ist es von Vorteil die Steuerbefehle an eine geringe Anzahl an Recheneinheiten zu verteilen, da diese jeweils mit mittels der unsicheren Kommunikationsstelle kommunizieren müssen. Werden die Steuerbefehle hingegen über eine stabile Internetverbindung verteilt, so kann auch eine große Anzahl an Recheneinheiten gemeinschaftlich die Steuerbefehle abarbeiten, da diese über eine verlässliche Anbindung kommunizieren.

Auch ist es erfindungsgemäß besonders vorteilhaft, dass, falls Energiemenge aufgrund geringer Abarbeitung von Steuerbefehlen zur Verfügung steht, diese an weitere Energiekonsumenten abzugeben. So kann beispielsweise ein Energieanforderungsprofil unterhalb der verfügbaren Energiemenge liegen, d.h., es ist Energie auch bei einem Abarbeiten von Steuerbefehlen verfügbar. Nunmehr kann die überschüssige Energie an weitere Energiesenken abgegeben werden. Eine Energiesenke kann hierbei ein Batteriespeicher oder ein weiterer beliebiger Energiekonsument sein.

Unter anderem zielt das Verfahren darauf ab, freie Kapazitäten in einer Telekommunikationsbetriebsstelle hinsichtlich der drei Komponenten Rechenkapazität, Energieversorgung und Batteriekapazität zu erfassen und geeignet zur Nutzung zu adressieren. Energieeffizientes Auslasten der Recheneinheiten ist dabei nur ein Aspekt der vorliegenden Erfindung. Ziel ist neben dem energieeffizienten Auslasten der Recheneinheiten auch die optimale Auslastung der angebotenen Energie wie Strom oder Wärme, sowie das Anbieten an andere Energiekonsumenten, wenn sie nicht selbst verbraucht werden kann. Auch die Möglichkeit der Elektroenergiespeicherung in Form von Batteriekapazität und der Nutzung für Regelenergie ist erfindungsgemäß vorgesehen.

Rechenkapazität wird für die Ausführung der Erbringung der eigentlichen Telekommunikationsdienste verwendet, wobei zusätzliche freie Kapazitäten für andere Aufgaben, u. a. auch Steuerbefehle der Anlagen an sich verwendet werden können. Erst wenn die Hauptaufgaben bezüglich der Erbringung der Telekommunikationsdienste erfüllt sind und dann Kapazitäten frei sind, können andere Konsumenten mit freien Kapazitäten versorgt werden.

Wenn die Energiemenge größer ist als die vom Rechennetz benötigte Energie, dann kann die überschüssige Energiemenge auch für andere Abnehmer bereitgestellt und ihnen zur Nutzung angeboten werden.

Besonders vorteilhaft gegenüber dem Stand der Technik ist die Anordnung und das Verfahren zur Bereitstellung von Informationen über den Zustand relevanter Systeme in Telekommunikationsstandorten (Betriebsstellen) hinsichtlich der Auslastung der Mehrzweckhardware und Angebot von Nutzung freier Ressourcen hinsichtlich Rechen- und Speicherkapazität sowie der Auslastung (Füllstand, Lade-/Entlade-Zyklus) der lokalen Notstromakkumulatoren. Freie Kapazität bzw. Energiemenge der lokal erzeugten Leistung/Energie, wie Strom/Wärme, aus erneuerbaren Quellen, wie Photovoltaik und Windenergie bzw. Kraft-Wärme-Kopplung werden bestimmt. Erfindungsgemäß wird ein transparentes Verfahren, das den notwendigen Informationsfluss sicherstellt bereitgestellt. Programmierbare Schnittstellen zum Betriebsstellen-Controller, also der Steuereinheit, werden zum Abfragen der Betriebsstellen-Charakteristika und Buchung/Zuweisung entsprechend angefragter Ressourcen bereitgestellt. Die Steuerung der Ressourcen-Controller erfolgt typischerweise über den Betriebsstellen-Controller.

Es erfolgt eine vorteilhafte Auslastung der vorhandenen Ressourcen, wie Rechen- und Speicherkapazität, in Betriebsstellen des Telekommunikationsnetzes, was einen effizienten und profitablen Betrieb des Telekommunikationsnetzes aus Sicht des Netzbetreibers ermöglicht. Es erfolgt eine flexible Bereitstellung von Lade-/Entladekapazitäten der Energiespeicher zur Stabilisierung des Energieversorgungsnetzes bei gleichzeitiger Aufrechterhaltung der Notstromfunktionalität. Hier ist aus Sicht des Netzbetreibers ein über das Kerngeschäft, nämlich das Anbieten von Kommunikationsdienstleistungen, hinausgehendes Geschäft erschließbar. Das Energieversorgungsnetz kann durch das Anbieten von Speichermöglichkeiten stabilisiert werden.

Besonders vorteilhaft ist die effiziente Eigennutzung und Bereitstellung lokal erzeugter Energie wie Strom und Wärme. Die Eigennutzung ermöglicht größere Unabhängigkeit von Energieversorger im Kerngeschäft, die Bereitstellung der Energie die Erschließung darüber hinausgehender Geschäftsfelder durch die Bereitstellung von Energie an Dritte.

Gemäß einem Aspekt der vorliegenden Erfindung werden die Recheneinheiten in dem verteilten Rechennetz derart adressiert, dass priorisierte Energiequellen die von den Recheneinheiten benötigte Energie bereitstellen. Dies hat den Vorteil, dass eine Bevorzugung bei der Zuteilung der Recheneinheiten derart erfolgt, dass in den geographischen Orten in dem Netzwerk an denen besonders viel Energie vorhanden ist die Rechenarbeiten abgearbeitet werden. Somit lässt sich eine Metrik implementieren, die besagt, welche Energiequellen besonders häufig verwendet werden und welche selten abgerufen werden. Hierbei erfolgt das Ansteuern der Energiequellen implizit durch die Wahl der Recheneinheiten. Somit wird in einer geographischen Region mit vielen priorisierten Energiequellen auch besonders häufig Recheneinheiten angefragt.

Gemäß einem weiteren Aspekt der vorliegenden Erfindung werden erneuerbare Energiequellen priorisiert. Dies hat den Vorteil, dass zuerst ökonomisch betriebene Energiequellen angefragt werden. Desweiteren können Energiequellen mit höheren Umweltbelastungen negativer beurteilt werden als umweltschonendere Energiequellen.

Gemäß einem weiteren Aspekt der vorliegenden Erfindung werden die erneuerbaren Energiequellen jeweils in Abhängigkeit von ihnen zugeordneten Wetterdaten priorisiert. Dies hat den Vorteil, dass beispielsweise falls in einer Region mit vielen Photovoltaik-Energiequellen wolkenfreies Wetter erwartet wird, das Verfahren dahingehend auszurichten ist, dass zu den entsprechenden Zeitspannen dort auch Recheneinheiten angefragt werden. In Regionen mit viel windbasierten Energiequellen wird entsprechend bei erwartetem Wind Rechenleistung angefragt.

Gemäß einem weiteren Aspekt der vorliegenden Erfindung weisen die Energiequellen mindestens ein Element aus einer Menge von Energiequellen auf, die Menge umfassend einen Batteriespeicher, einen Akkumulator, ein Notstromaggregat, eine Photovoltaik-Anlage, eine Windenergieanlage, eine Wasserkraftanlage, ein mit fossilen Energieträgern betriebenes Kraftwerk und ein mit Kernbrennstoffen betriebenes Kraftwerk. Dies hat den Vorteil, dass eine Vielzahl von Energiequellen gleichzeitig an das Rechennetz angeschlossen werden kann. Insbesondere ist es auch möglich Energiespeicher wie zum Beispiel Batterien in das Stromnetz des entsprechenden Rechennetzes einzuspeisen.

Gemäß einem weiteren Aspekt der vorliegenden Erfindung wird die benötigte Rechenkapazität der Steuerbefehle mit in den einzelnen Recheneinheiten vorhandener Rechenkapazität verglichen und es werden nur diejenigen Recheneinheiten adressiert, die ausreichend Rechenkapazität zur Abarbeitung der Steuerbefehle aufweisen. Dies hat den Vorteil, dass vorhandene bereits in Betrieb genommene Recheneinheiten verwendet werden. Dies verhindert, dass weitere Rechenkapazitäten hochgefahren werden müssen. Sollte an einer Recheneinheit nicht genügend Rechenkapazität vorhanden sein, so wird gemäß einer Verteilungsmetrik eine alternative Recheneinheit angefragt.

Gemäß einem weiteren Aspekt der vorliegenden Erfindung werden die Steuerbefehle derart aufgeteilt, dass mehrere Recheneinheiten diese verteilt abarbeiten. Dies hat den Vorteil, dass eine Lastverteilung der abzuarbeitenden Steuerbefehle erfolgt. Somit ist es erfindungsgemäß möglich die Steuerbefehle derart aufzuteilen und verteilt abarbeiten zu lassen, dass eine besonders vorteilhafte Auslastung bezüglich der Rechenkapazität erfolgt.

Gemäß einem weiteren Aspekt der vorliegenden Erfindung werden Ortsdaten der Recheneinheiten zu deren Adressierung verwendet. Dies hat den Vorteil, dass die Ortsdaten beispielsweise bei der Abschätzung von Antwortzeiten Verwendung finden können. So können auch Netzwerkparameter berücksichtigt werden, die beschreiben wie lange ein Übersenden von Steuerbefehlen an eine Recheneinheit dauert. Somit kann auch ein Rückschluss getroffen werden, ob eine geographisch entfernte Recheneinheit angesprochen werden soll. Bei Echtzeitanwendungen kann somit entschieden werden, dass bevorzugt eine geographisch nahe dienstanbietende Recheneinheit durch eine dienstanfragende Recheneinheit beauftragt wird. Sind Antwortzeiten in dem zugrunde liegenden Anwendungsszenario nicht von Bedeutung, kann stets eine entfernte Recheneinheit angesteuert werden, falls dies bezüglich deren Rechenkapazität und Energiekapazität von Vorteil ist.

Gemäß einem weiteren Aspekt der vorliegenden Erfindung erfolgt die Adressierung der Recheneinheiten in Abhängigkeit von Netzwerkparametern des verteilten Rechennetzes. Dies hat den Vorteil, dass besonders sichere Verbindungen oder verschlüsselte Verbindungen bevorzugt werden können. Auch kann in Abhängigkeit der Steuerbefehle falls notwendig eine besonders breitbandige Verbindung gewählt werden.

Gemäß einem weiteren Aspekt der vorliegenden Erfindung weist das Rechennetz ein Telekommunikationsfestnetz oder ein Mobilfunknetz auf. Das verwendete Netzwerk stellt gemäß einem Aspekt der vorliegenden Erfindung zumindest alle Funktionen solcher Netzwerke bereit. Dies hat den Vorteil, dass ein stationäres und/oder ein Mobilfunknetz Verwendung finden kann. Das Netzwerk kann auch derart gemischt sein, dass Teilstrecken kabelgebunden und weitere Teilstrecken mittels Luftschnittstelle implementiert werden.

Gemäß einem weiteren Aspekt der vorliegenden Erfindung liegt eine Recheneinheit als eine Einheit aus einer Menge von Einheiten vor, die Menge aufweisend einen Computer, ein Rechenzentrum, einen Cluster, mindestens einen Schaltkreis, ein mobiles Endgerät, ein Bordgerät eines Fahrzeugs und ein Smart-Home-Gerät. Dies hat den Vorteil, dass die verwendeten Recheneinheiten heterogen ausgestaltet werden können und je nach Bedarf beziehungsweise Verfügbarkeit geeignete Recheneinheiten angesteuert werden können.

Gemäß einem weiteren Aspekt der vorliegenden Erfindung wirken mehrere Energiequellen zum Bereitstellen einer Energiemenge zusammen. Dies hat den Vorteil, dass auch Energiecluster gebildet werden können. So können mehrere Energiequellen zusammengeschaltet werden um einem Rechencluster eine geforderte Energiemenge bereitzustellen.

Gemäß einem weiteren Aspekt der vorliegenden Erfindung wird eine in dem Rechennetz nicht verwendete Energiemenge mindestens einer Energiesenke aus einer Gruppe zugeführt, die Gruppe aufweisend einen Batteriespeicher, einen Akkumulator und einen Endverbraucher. Dies hat den Vorteil, dass nicht benötigte Energie entweder in einem Energiespeicher zur späteren Nutzung zugeführt werden kann oder die nicht benötigte Energie wird weiteren Energiekonsumenten angeboten.

Die Aufgabe wird ebenfalls gelöst durch eine Vorrichtung zum energieeffizienten Auslasten von Recheneinheiten in einem verteilten Rechennetz, aufweisend eine Sensoreinheit eingerichtet zum Bestimmen jeweils einer an das Rechennetz bereitgestellten Energiemenge von Energiequellen, durch die das Rechennetz versorgt wird, eine Messeinheit eingerichtet zum Bestimmen jeweils einer Rechenkapazität der Recheneinheiten und eine Adressierungseinheit eingerichtet zum Adressieren der einzelnen Recheneinheiten mittels bereitgestellter Steuerbefehle in Abhängigkeit der jeweils an den Recheneinheiten vorhandenen Energiemenge und der vorhandenen Rechenkapazität.

Gemäß der vorgeschlagenen Vorrichtung ist es möglich eine zentrale Steuereinheit einzurichten, welche zumindest für einen Teil des Rechennetzes die Lastverteilung bezüglich Energiebedarf und Rechenbedarf koordiniert.

Beispielsweise liegt die vorgeschlagene Vorrichtung als zumindest ein Teil einer Betriebsstelle vor, wobei es auch möglich ist, dass die vorgeschlagene Vorrichtung mit mehreren Betriebsstellen kommuniziert. So kann die Vorrichtung beispielsweise zentral installiert werden und alle Recheneinheiten des verteilten Rechennetzes koordinieren. Ferner ist es auch möglich, dass eine Mehrzahl der vorgeschlagenen Vorrichtung in dem verteilten Rechennetz Anwendung findet und somit ein System, welches zumindest einen Teil des Rechennetzes umspannt, vorliegt. Auch kann es vorteilhaft sein, bereits bestehende Einrichtungen durch die vorgeschlagene Vorrichtung, bzw. das vorgeschlagene System anzusprechen. So können beispielsweise Netzwerkknoten eines vorhandenen Rechennetzes derart weiterverwendet werden, dass sich die vorgeschlagene Vorrichtung bzw. das vorgeschlagene System auch in bestehende Netzwerke integrieren lässt.

Die Aufgabe wird ebenfalls gelöst durch ein System zum energieeffizienten Auslasten von Recheneinheiten in einem verteilten Rechennetz mit mindestens einer der vorbeschriebenen Vorrichtungen.

Die Aufgabe wird ebenfalls gelöst durch ein Computerprogramm mit Steuerbefehlen zur Durchführung eines der vorbeschriebenen Verfahren.

Im Folgenden werden einzelne Aspekte der vorliegenden Erfindung beispielhaft anhand der Figuren ausführlich beschrieben. Es zeigt:
- Figur 1:: eine Betriebsstelle eines Telekommunikationsnetzes gemäß dem Stand der Technik als ein beispielhaftes Anwendungsszenario der vorliegenden Erfindung;
- Figur 2:: eine beispielhafte Betriebsstelle eines Telekommunikationsnetzes gemäß einem Aspekt der vorliegenden Erfindung;
- Figur 3:: ein beispielhaftes Sequenzprotokoll eines Aspekts des erfindungsgemäßen Verfahrens zum energieeffizienten Auslasten eines Rechennetzes;
- Figur 4:: ein beispielhaftes Ablaufdiagramm eines Aspekts des erfindungsgemäßen Verfahrens zum energieeffizienten Auslasten eines Rechennetzes;
- Figur 5:: ein beispielhaftes Rechennetz mit Energiequellen und Recheneinheiten gemäß einem Aspekt des erfindungsgemäßen Verfahrens; und
- Figur 6:: ein weiteres beispielhaftes Ablaufdiagramm gemäß einem Aspekt des erfindungsgemäßen Verfahrens zum energieeffizienten Auslasten eines Rechennetzes.

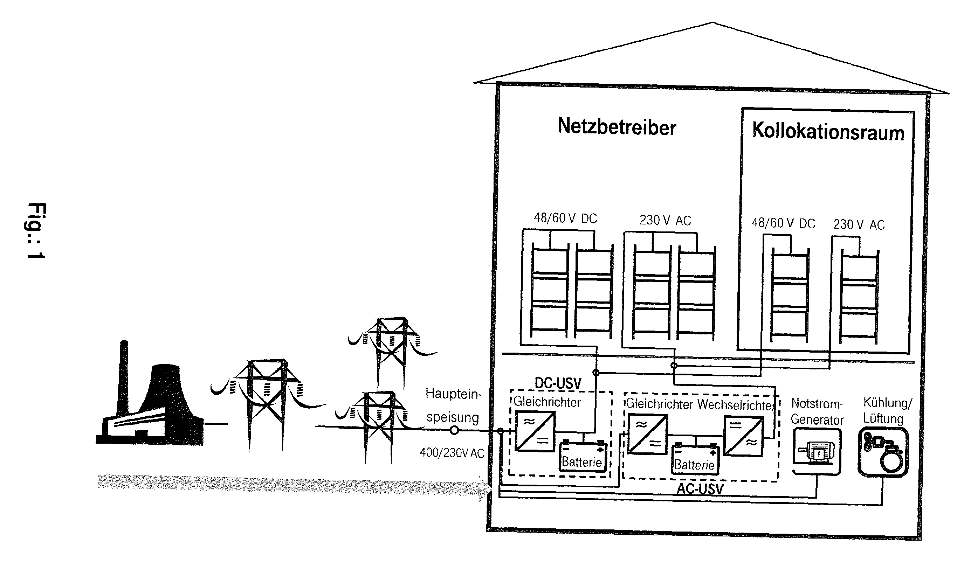

Figur 1 zeigt exemplarisch eine Anordnung entsprechend dem Stand der Technik für eine Betriebsstelle des Telekommunikationsnetzes. Es wird spezialisierte Systemtechnik, also Hardware, verwendet, um die wesentlichen Funktionen des Telekommunikationsnetzes auszuführen. Diese Systemtechnik benötigt Elektroenergie für ihren Betrieb. Entsprechend der klassischen Elektroenergieversorgungskette wird Elektroenergie im Kraftwerk erzeugt, bzw. aus anderen Energieformen in Elektroenergie umgewandelt, und erreicht über die Übertragungs- und Verteilernetze des Energieversorgungsnetzes die Betriebsstellen des Telekommunikationsnetzes. Dort übernehmen unterstützende Systeme wie die DC-USV (unterbrechungsfreie Stromversorgung für Gleichspannung) und die AC-USV (unterbrechungsfreie Stromversorgung für Wechselspannung) die Umsetzung in für die Telekommunikationstechnik geeignete Spannungsebenen und stellen den Weiterbetrieb auch bei längerem Ausfall des speisenden Energieversorgungsnetzes sicher. Darüber hinaus gibt es unterstützende Systeme, die für Klimatisierung und Kühlung der Betriebsräume sorgen sowie Notstromgeneratoren, die in länger andauernden Notfällen die Stromversorgung sicherstellen, wenn das Energieversorgungsnetz ausfällt und auch die Batteriekapazität zur Neige geht. In einem Kollokationsraum kann Telekommunikationsnetztechnik anderer Netzbetreiber betrieben werden, die auch Elektroenergie und Klimatisierung über den beschriebenen Weg zur Verfügung gestellt bekommen können.

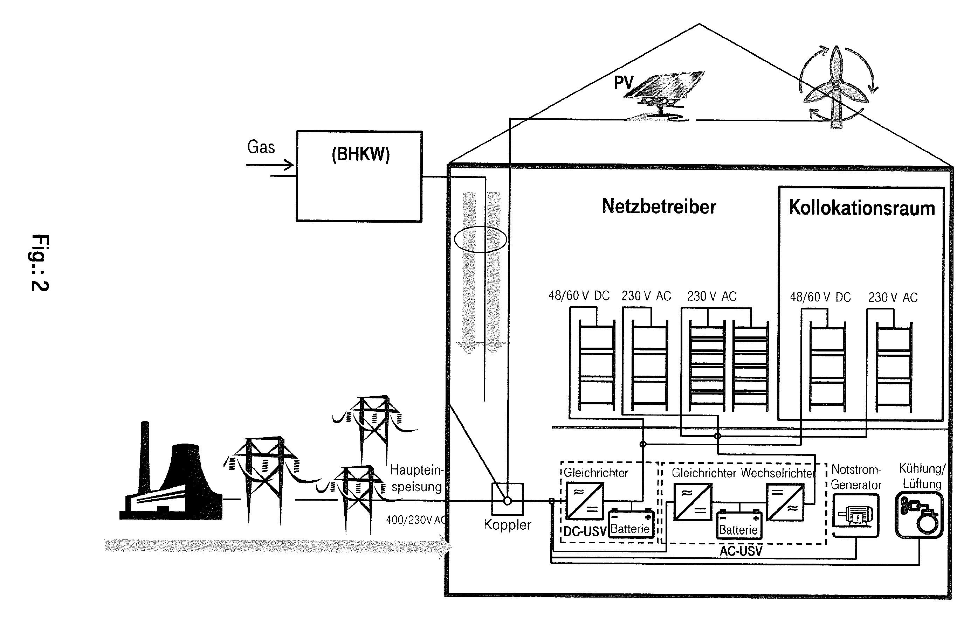

Figur 2 zeigt den möglichen zukünftigen Aufbau der Betriebsstellen von Telekommunikationsnetzbetreibern. Gegenüber dem Stand der Technik ist erkennbar, dass anstelle von spezialisierter Telekommunikationstechnik die Mehrzweckhardware, wie Server in Rack-Bauweise, getreten ist. Diese kann sowohl für eigene Zwecke wie das Ausführen von Netzfunktionen der Telekommunikationsnetzbetreiber verwendet werden, als auch anderen Nutzern zur Verfügung gestellt werden. Es erfolgt ein Bereitstellen von Rechen- und Speicherkapazität der Informationstechnik für andere Konsumenten. Ferner können auf dieser universellen Hardware auch Anwendungen laufen, die die lokalen Ressourcen der Betriebsstelle steuern, wie zum Beispiel Controller für Gleichrichter, Akkumulatoren, Klimatisierungs- und Lüftungstechnik, Photovoltaik-Anlagen, Windturbinen oder Blockheizkraftwerke. Auch der Betriebsstellen-Controller (Master), über den sowohl der Telekommunikationsnetzbetreiber als Eigentümer und Verwalter die Steuerung der Ressourcen vornimmt, als auch andere Konsumenten Anfragen und Buchungen vornehmen können, läuft auf dieser universellen Hardware. Weiterhin ist es möglich, weitere Controller auf dieser Hardware residieren zu lassen. Vorstellbar sind u.a. Steuerungsmöglichkeiten für die komplette Liegenschaft, wie Smart Metering, Hausautomation, Licht, Büros u.a.

Neben dem bestehenden Anschluss an das lokale Energienetz sind für die Eigenversorgung mit Energie, wie Strom/Wärme, sowie Rückspeisung ins Strom- und Wärmenetz weitere autarke Systeme wie Photovoltaik-Anlagen, Windturbinen und Blockheizkraftwerke vorhanden. Je nach lokalen Gegebenheiten sind auch nur einzelne Anlagen dieser Gruppe in einer Betriebsstelle vorhanden. Das Vorhandensein der jeweiligen Systeme ist Ergebnis einer Wirtschaftlichkeitsbetrachtung des Betriebsstellenbetreibers.

Im Rahmen der Erfindung wird gemäß einem Aspekt für jede Betriebsstelle ein standardisiertes Label aufweisend Eigenschaften und Parameterlisten generiert, welche folgende Werte aufweisen kann: eine eindeutige Betriebsstellennummer, diese kann aus Geo-Koordinate gewonnen werden; eine Geo-Koordinate zum Beispiel für Laufzeitenberechnung im Hinblick auf die Ausführung von Telekommunikationsnetzfunktionen erforderlich; einen Zeitstempel, den aktuellen Bedarf an Elektroenergie der Telekommunikationstechnik in der Betriebsstelle; eine IT-Kapazität, welche die momentane Auslastung und freie Kapazitäten des Speichers, Computer, Netzwerk und der Server-Hardware anzeigt; eine Batteriekapazität / Auslastung (Füllstand) sowie Ladezyklus (Ladung/Entladung); eine momentane erzeugte Energie (Eigenstrom/-wärme) und die Art (Wind, Photovoltaik, Blockheizkraftwerke); freie Kapazität an Strom und Wärme sowie lokale Wetterdaten.

Dynamisches Verschieben von VMs in Kommunikationsnetzen, auch geographisch über große Entfernungen, wird durch die Anwendung von Virtualisierungstechniken und SDN-Konzepten in Telekommunikationsnetzen möglich. Eine Randbedingung für die Auswahl des Rechenzentrums bzw. der Betriebsstelle für eine solche Verarbeitung kann die Verfügbarkeit und der Preis von Energie sein. Im Zeitalter vorwiegend erneuerbarer Energie ändert sich die Energieverfügbarkeit im Tagesverlauf. Im Ergebnis steht dann ein zeit- und ortsabhängiges bzw. -variables Ausführen von Kommunikationsnetzfunktionen, um eine maximale Kosteneffizienz des Netzbetriebs zu gewährleisten.

Die Parameter der Liste werden von den zuständigen Controllern der relevanten Systeme permanent vorgehalten und auf Anfrage des Betriebsstellenbetreibers bzw. des Telekommunikationsnetzbetreibers oder anderer Konsumenten (Request) zur Verfügung gestellt. Dies geschieht über eine offengelegte transparente Schnittstelle des Master-Controllers. Wird die angefragte Ressource dann auch angefordert bzw. allokiert, kann über eine vom jeweiligen System abhängige und üblicherweise standardisierte Schnittstelle die Ressource direkt über den zugehörigen Controller (Slave) gesteuert werden. Man hat dadurch die Möglichkeit, über den Master-Controller die dargebotenen Kapazitäten entsprechend zu steuern. Mit der nächsten Anfrage wird die Parameterliste entsprechend aktualisiert. Um diese Operationen ausführen zu können, ist eine hoch performante Anbindung ans Telekommunikationsnetz und ans Energieversorgungsnetz vorteilhaft. Beide Anbindungen sind in einer Telekommunikationsnetzbetriebsstelle typischerweise immer vorhanden.

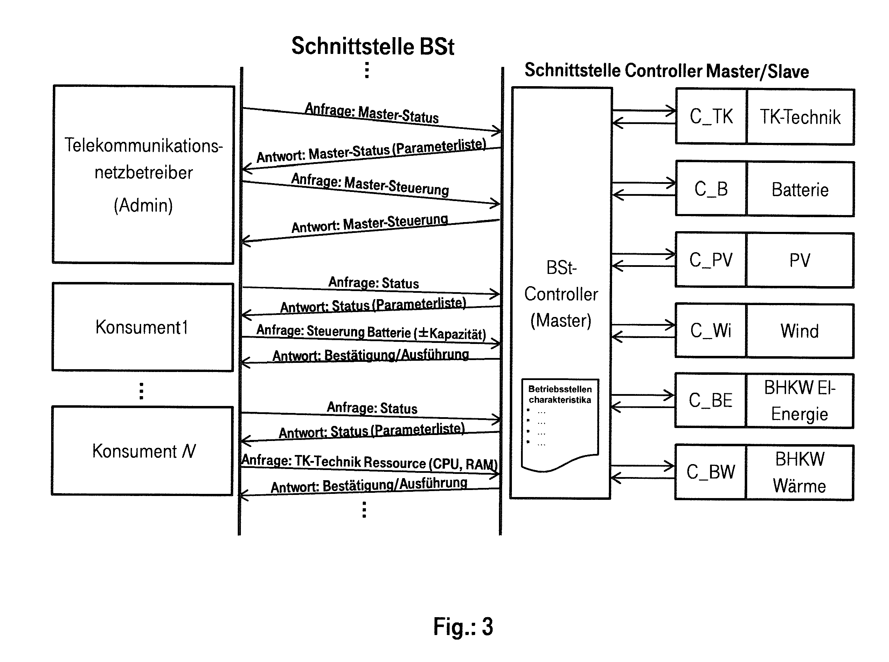

Figur 3 zeigt schematisch das Wirkprinzip entsprechend der vorliegenden Erfindungsbeschreibung. Zu jeder Betriebsstelle existiert eine einheitliche Parameterliste, die sich aus den o.a. Parametern zusammensetzt. Der Telekommunikationsnetzbetreiber als Eigentümer der Technik und Betreiber der Betriebsstelle, sowie alle Konsumenten können jederzeit die Parameterliste einzelner Betriebsstellen über eine standardisierte Schnittstelle abfragen. Diese Schnittstelle (Schnittstelle Betriebsstellen) wird vom Betreiber offengelegt und ist für alle Konsumenten transparent. Damit besteht Zugriff auf den Betriebsstellen-Controller (Master-Controller), der die Parameter aller beteiligten Komponenten (Ressourcen) der Betriebsstelle (Telekommunikationstechnik, Batterien, Photovoltaik-/Windenergieanlagen, Blockheizkraftwerke) entgegen nimmt. Der Master-Controller hat Zugriff auf alle Komponenten/Anlagen der Betriebsstelle und kann über die Schnittstelle zu den jeweiligen Controllern der anderen Systeme (Schnittstelle Master/Slave) deren Steuerung vornehmen. Vielfach sind diese Schnittstellen systemspezifisch und erfordern eine passende Einbindung an den Master-Controller, damit die Steuerung der einzelnen Ressource für die Konsumenten weiterhin transparent erfolgen kann. Über die definierte Schnittstelle und in einem vorgegebenen Format beziehungsweise einem Protokoll können diese Informationen dann dem Telekommunikationsnetzbetreiber selbst zur Optimierung seines Netzbetriebs oder externen Marktteilnehmern zum Konsum temporär freier Ressourcen oder angebotener Energie zur Verfügung gestellt werden. Dabei hat der Betreiber auch die Administrator-Rechte (Master Funktionen). Damit soll sichergestellt werden, dass der Telekommunikationsnetzbetreiber im Notfall auch zum Beispiel ihm übertragene hoheitliche oder regulatorische Pflichten erfüllen kann. Dies kann dazu führen, dass anderen Marktteilnehmern der Zugriff eingeschränkt oder sogar verweigert werden kann.

Die erfindungsgemäße Anordnung wird anhand zweier Ausführungsbeispiele im Folgenden detailliert erklärt. Als Anwendungsmöglichkeiten sind u. a. folgende Fälle denkbar. Es können Netzfunktionen über die Betriebsstellen des eigenen Netzes und dessen Kapazitäten verschoben werden. Temporär freie Rechen-/Speicherkapazität kann von externen Marktteilnehmern genutzt werden. Energie wird somit an andere Energiekonsumenten abgegeben, wenn die Telekommunikationsnetzbetriebsstellen sie nicht selbst verbrauchen.

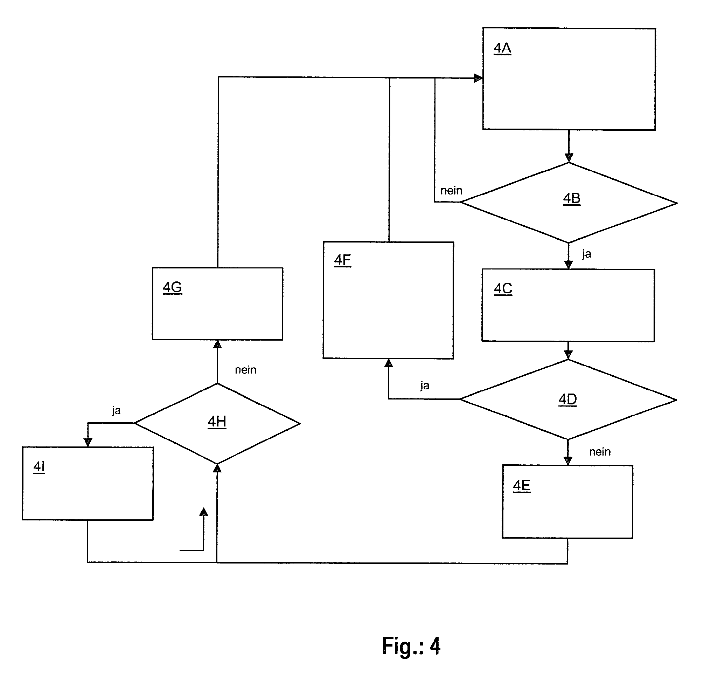

Figur 4 zeigt schematisch einen Ablauf für ein Ausführungsbeispiel entsprechend der vorliegenden Erfindungsbeschreibung: Das Telekommunikationsnetz mit entsprechenden Netzfunktionen wird für den Spitzenverkehr dimensioniert und in Schwachlastzeiten zum Beispiel nachts können freie Kapazitäten wie Rechenleistung und Speicherkapazität anderen Marktteilnehmern zur Nutzung angeboten werden und es können ebenso Funktionen an zentralere Positionen verschoben werden und ungenutzte Ressourcen bei Nichtbenötigen abgeschaltet werden, beispielsweise zur Optimierung des eigenen Netzbetriebs. Dabei hat der Betrieb des Telekommunikationsnetzes als Hauptaufgabe des Netzbetreibers Vorrang und das Anbieten der Ressourcen an Dritte ist nachrangig.

So wird ständig die Parameterliste durch den Betriebsstellen-Controller aktuell gehalten. Wird eine Unterauslastung der IT-Kapazität detektiert, so wird zunächst geprüft, ob eine Umverteilung der Netzfunktionen einen effizienteren Netzbetrieb ermöglichen würde. Wenn dies so ist, werden Netzfunktionen im Netz innerhalb der Betriebsstelle oder auch über geographisch entfernte Betriebsstellen verschoben und dann freigewordene Ressourcen können auf zweierlei Art genutzt werden. Es wird zunächst geprüft, ob Konsumenten freie oder frei gewordene Ressourcen des Telekommunikationsnetzes nachfragen. Wenn das so ist, werden diese zur Nutzung "vermietet" und es wird auf diese Weise die Auslastung der eigenen Ressourcen des Telekommunikationsnetzes maximiert und es werden zusätzlich Einnahmen generiert. Werden solche Ressourcen nicht nachgefragt, werden sie abgeschaltet zum Zweck der Energieeinsparung.

In der vorliegenden Figur 4 beschreibt der Verfahrensschritt 4A einen Normalzustand des zugrunde liegenden Systems in dem alle Netzfunktionen ausgeführt werden und ein Telekommunikationsnetz im Optimum arbeiten und alle Hardware-Kapazitäten ausgeschöpft sind. Sind nunmehr in einem darauffolgenden Verfahrensschritt 4B IT-Kapazitäten im Netz frei, wird an Verfahrensschritt 4C verwiesen. In diesem Verfahrensschritt 4C erfolgt ein Optimieren der Anordnung und Verteilen der Funktionen im Netz, was vorliegend zuerst in dem Verfahrensschritt 4C geprüft wird. Daraufhin erfolgt in einem weiteren Verfahrensschritt 4D ein Überprüfen ob eine Verschiebung von Netzfunktionen vorteilhaft erscheint. Ist dies nicht der Fall, so erfolgt in Verfahrensschritt 4E ein Anbieten der Kapazitäten über eine Öffnungsstelle an externe Marktteilnehmer bzw. Konsumenten. Fällt in Verfahrensschritt 4D jedoch die Entscheidung, dass ein Verschieben von Netzfunktionen vorteilhaft ist, so wird in den Verfahrensschritt 4F verzweigt, und entsprechende Netzfunktionen werden verschoben, d.h., Steuerbefehle werden an anderen Standorten bzw. Recheneinheiten ausgeführt.

Werden im Verfahrensschritt 4E Kapazitäten des Systems freigegeben, so wird in dem Verfahrensschritt 4H verzweigt, in dem überprüft wird, ob Kapazitäten nachgefragt werden. Ist dies nicht der Fall, so wird in Verfahrensschritt 4G verzweigt und entsprechende nichtgenutzte Kapazitäten werden abgeschaltet. Werden jedoch Kapazitäten nachgefragt, so erfolgt ein Ausführen des Verfahrensschritts 4I und die Ressourcen werden zur Verfügung gestellt.

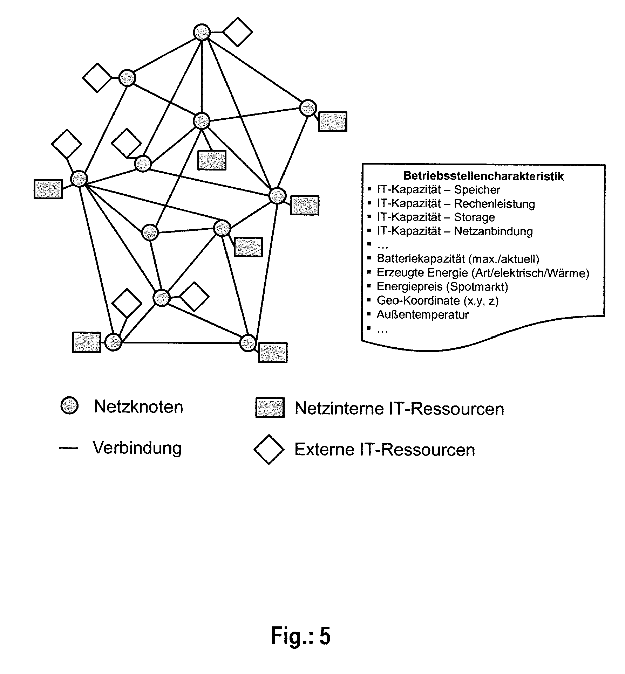

Figur 5 zeigt eine mögliche Anordnung mit Netzknoten entsprechend der Betriebsstellen, wobei "netzinterne IT-Ressourcen" Rechen- und Speicherkapazität auf Mehrzweck-Hardware beschreiben, die dem Telekommunikationsnetz originär zugeordnet ist und sich dementsprechend in dessen Betriebsstellen befindet. Zwischen diesen netzinternen IT-Ressourcen können die Netzfunktionen entsprechend des erläuterten Prinzips verschoben werden. Ebenfalls vorteilhaft ist es, dass, sofern Netzfunktionen auf Mehrzweckhardware ausgeführt werden können, auch netzexterne IT-Ressourcen, die zum Beispiel in Rechenzentren Dritter residieren, mit zu deren Ausführung genutzt werden können, siehe auch Figur 5, wenn Lastspitzen dies erforderlich machen sollten. Hierbei sind dann neben wirtschaftlichen auch Netzsicherheitsaspekte zu betrachten, die nicht Gegenstand dieser Erfindungsbeschreibung sind.

In einem weiteren Ausführungsbeispiel der vorliegenden Erfindung erfolgt ein Anbieten von Energie oder Batteriekapazität für externe Konsumenten (z.B. Regelenergie für Energieversorger).

In einem zweiten Ausführungsbeispiel wird auf die in der Betriebsstelle erzeugte Energie abgestellt sowie die damit verbundenen Speicherressourcen der Batterien. Sucht der lokale Energieversorger positive (schnell eine hohe Nachfrage an Strom bedienen; Strom ins Netz einspeisen) oder negative Regelenergie (schnell ein hohes Strom-Angebot bedienen; Last vom Netz abschalten), kann in den Betriebsstellen des Telekommunikationsnetzes durch entsprechendes Batteriemanagement der gewünschte Effekt durch gezieltes Laden oder Entladen der Batterien erreicht werden. Dazu wird entweder überschüssige Kapazität in den Batterien ins Netz eingespeist, sogenannte positive Regelenergie, oder, wenn zu viel "Energie-Angebot" im Netz ist, durch gezieltes Aufladen der Batterien dieses Überangebot im Netz reduziert, auch als negative Regelenergie bezeichnet.

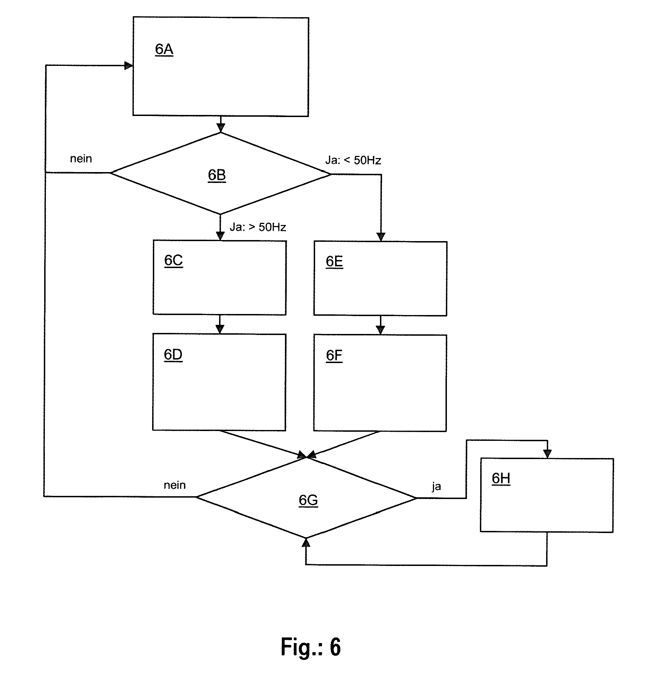

Figur 6 zeigt ein Ablaufdiagramm, welches diesen Regelprozess verdeutlicht. Beide Varianten der Energieregelung lassen sich auch durch zusätzliches Einbeziehen der lokalen Abnehmer, zum Beispiel TK-Technik in der Betriebsstelle, Klimaanlagen, u.a. und der lokal erzeugten Energiequellen verwalten. Soll überschüssige elektrische Last vom Netz genommen werden, so speist man die lokale Technik aus dem angeschlossenen Energienetz oder bietet negative Regelenergie an, indem die teilentladenen Batterien aufgeladen werden und somit das Überangebot an Energie im Netz abgebaut wird. Alternativ, wenn kurzfristig zusätzliche Energie im Energienetz benötigt wird, speist man überschüssige elektrische Energie in das Versorgungsnetz ein, die gerade lokal mit eigenen Kapazitäten (Photovoltaik, Wind, BHKW, vollgeladene Batterien) erzeugt, aber nicht für den Betrieb der Telekommunikationsanlagen benötigt wird ein, sogenannte positive Regelenergie.

Das Label der Betriebsstelle, auch Parameterliste genannt, zeigt hierzu den momentanen Zustand der Energieanlagen an, wie zum Beispiel welche Parameter gerade Photovoltaik, Wind oder Blockheizkraftwerke liefern und zeigt den Ladezustand der Batterien. Der Energieversorger kann dann die jeweilige Energie nach Art und Vorzeichen anfordern.

Wenn nicht positive oder negative Regelenergie durch den Energieversorger benötigt wird, kann ein weiterer Mechanismus realisiert werden. Die durch Eigenerzeugung in der Betriebsstelle gewonnene und dort nicht benötigte Energie wird an Dritte verkauft. Das Blockheizkraftwerk erzeugt Elektroenergie und Wärme, außerdem ist Photovoltaik und Windenergie vorhanden und wird dann günstig angeboten. Wenn überflüssige Energie nicht gebraucht wird, wird sie am Markt angeboten. Ein lokaler Betriebsstellencontroller regelt das je Betriebsstelle, ein übergeordneter Controller könnte das für eine Region, zum Beispiel eine Regelzone, sammeln und steuern, wenn notwendig. Diese Energieaspekte sind aus Sicht des Telekommunikationsnetzbetreibers nachrangig gegenüber den Telekommunikationsservices.

Somit wird erfindungsgemäß ein Verfahren zur Erfassung von relevanten Daten von Betriebsstellen des Telekommunikationsnetzes beschrieben mit einer Schnittstelle zur Bereitstellung von Parametern zur Auslastung bzw. zum Ermitteln des Kapazitätsbedarfs und des Kapazitätsangebots der vorhandenen Systeme mitsamt einer Schnittstelle zur direkten Steuerung der einzelnen Systeme über anlagenspezifische Controller, also Steuereinheiten.

In der vorliegenden Figur 6 beschreibt der erste Verfahrensschritt 6A einen Normalzustand, in dem das lokale Energienetz des Versorgers derart ausgelastet ist, dass sich Angebot und Nachfrage in etwa entsprechen. Die Netzfrequenz ist hierbei z. B. 50 Hz. Darauf folgt ein Verfahrensschritt 6B, indem in die Netzfrequenz überprüft wird und insbesondere überprüft wird, ob die Netzfrequenz von 50 Hz abweicht. Ist dies der Fall und ist die Netzfrequenz größer als 50 Hz, so fordert der lokale Energieversorger negative Regelenergie ein. Daraufhin wird in dem Verfahrensschritt 6D ein Aufladen entladener Batterien durch den Telekommunikationsnetzbetreiber veranlasst und dieser nimmt mehr Leistung aus dem Energienetz.

Wird jedoch in Verfahrensschritt 6B festgestellt, dass die Netzfrequenz derart von 50 Hz abweicht, dass diese niedriger als 50 Hz ist, so erfolgt ein Verzweigen in den Verfahrensschritt 6E, indem der lokale Energieversorger positive Regelenergie einfordert. Daraufhin speist der Telekommunikationsnetzbetreiber überschüssige Batteriekapazität in den Verfahrensschritt 6F in das Netz ein. In jedem Fall wird in Verfahrensschritt 6E verzweigt, indem wiederum überprüft wird, ob die Netzfrequenz von 50 Hz abweicht. Ist dies der Fall, so wird in dem Verfahrensschritt 6H weitere Regelenergie eingebunden, was beispielsweise durch den Energienetzversorger veranlasst wird. Der Fachmann erkennt hierbei, dass sich bei dem Wert 50 Hz, also 50 Hertz, lediglich um einen beispielhaften Wert einer möglichen Netzfrequenz handelt.

Somit wird ein vorteilhaftes Verfahren bzw. eine vorteilhafte Vorrichtung vorgeschlagen, welche es erlaubt, Rechenaufgaben verteilt in einem Netzwerk abarbeiten zu lassen und hierbei die vorhandenen Energiequellen bzw. vorhandenen Rechenkapazitäten zu berücksichtigen.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

## Patentansprüche

1. Verfahren zum energieeffizienten Auslasten von Recheneinheiten in einem verteilten Rechennetz, aufweisend:
- Bestimmen jeweils einer an das Rechennetz bereitgestellten Energiemenge von Energiequellen durch die das Rechennetz versorgt wird;
- Bestimmen einer Rechenkapazität jeweils einer Recheneinheit; und
- Adressieren der einzelnen Recheneinheiten mittels bereitgestellter Steuerbefehle in Abhängigkeit der jeweils an den Recheneinheiten vorhandenen Energiemenge und der vorhandenen Rechenkapazität.

2. Verfahren gemäß Anspruch 1, wobei die Recheneinheiten in dem verteilten Rechennetz derart adressiert werden, dass priorisierte Energiequellen die von den Recheneinheiten benötigte Energie bereitstellen.

3. Verfahren gemäß Anspruch 2, wobei erneuerbare Energiequellen priorisiert werden.

4. Verfahren gemäß Anspruch 3, wobei die erneuerbaren Energiequellen jeweils in Abhängigkeit von ihnen zugeordneten Wetterdaten priorisiert werden.

5. Verfahren gemäß einem der vorherigen Ansprüche, wobei die Energiequellen mindestens ein Element aus einer Menge von Energiequellen aufweisen, die Menge umfassend einen Batteriespeicher, einen Akkumulator, ein Notstromaggregat, eine Photovoltaik-Anlage, eine Windenergieanlage, eine Wasserkraftanlage, ein mit fossilen Energieträgern betriebenes Kraftwerk und ein mit Kernbrennstoffen betriebenes Kraftwerk.

6. Verfahren gemäß einem der vorherigen Ansprüche, wobei die benötigte Rechenkapazität der Steuerbefehle mit in den einzelnen Recheneinheiten vorhandener Rechenkapazität verglichen wird und nur die Recheneinheiten adressiert werden, die ausreichend Rechenkapazität zur Abarbeitung der Steuerbefehle aufweisen.

7. Verfahren gemäß einem der vorherigen Ansprüche, wobei die Steuerbefehle derart aufgeteilt werden, dass mehrere Recheneinheiten diese verteilt abarbeiten.

8. Verfahren gemäß einem der vorherigen Ansprüche, wobei Ortsdaten der Recheneinheiten zu deren Adressierung verwendet werden.

9. Verfahren gemäß einem der vorherigen Ansprüche, wobei bei die Adressierung der Recheneinheiten in Abhängigkeit von Netzwerkparametern des verteilten Rechennetzes erfolgt.

10. Verfahren gemäß einem der vorherigen Ansprüche, wobei das Rechennetz ein Telekommunikationsfestnetz oder ein Mobilfunknetz aufweist.

11. Verfahren gemäß einem der vorherigen Ansprüche, wobei eine Recheneinheit als eine Einheit aus einer Menge von Einheiten vorliegt, die Menge aufweisend einen Computer, ein Rechenzentrum, einen Cluster, mindestens einen Schaltkreis, ein mobiles Endgerät, ein Bordgerät eines Fahrzeugs und ein Smart-Home-Gerät.

12. Verfahren gemäß einem der vorherigen Ansprüche, wobei mehrere Energiequellen zum Bereitstellen einer Energiemenge zusammenwirken.

13. Verfahren gemäß einem der vorherigen Ansprüche, wobei eine in dem Rechennetz nicht verwendete Energiemenge mindestens einer Energiesenke aus einer Gruppe zugeführt wird, die Gruppe aufweisend einen Batteriespeicher, einen Akkumulator und einen Endverbraucher.

14. Vorrichtung zum energieeffizienten Auslasten von Recheneinheiten in einem verteilten Rechennetz, aufweisend:
- eine Sensoreinheit eingerichtet zum Bestimmen jeweils einer an das Rechennetz bereitgestellten Energiemenge von Energiequellen durch die das Rechennetz versorgt wird;
- eine Messeinheit eingerichtet zum Bestimmen jeweils einer Rechenkapazität der Recheneinheiten; und
- eine Adressierungseinheit eingerichtet zum Adressieren der einzelnen Recheneinheiten mittels bereitgestellter Steuerbefehle in Abhängigkeit der jeweils an den Recheneinheiten vorhandenen Energiemenge und der vorhandenen Rechenkapazität.

15. System zum energieeffizienten Auslasten von Recheneinheiten in einem verteilten Rechennetz mit mindestens einer Vorrichtung gemäß Anspruch 14.

16. Computerprogramm mit Steuerbefehlen zur Durchführung eines Verfahrens gemäß einem der Ansprüche 1 bis 13.

## Geänderte Patentansprüche

### Geänderte Patentansprüche gemäss Regel 137(2) EPÜ.

1. Verfahren zum energieeffizienten Auslasten von Recheneinheiten an verschiedenen geographischen Standorten in einem verteilten Rechennetz, aufweisend:
- Bestimmen jeweils einer an das Rechennetz bereitgestellten Energiemenge von Energiequellen, durch die das Rechennetz versorgt wird, wobei mehrere Energiequellen zum Bereitstellen der Energiemenge zusammenwirken;
- Bestimmen einer momentan vorhandenen Rechenkapazität jeweils einer Recheneinheit; und
- Adressieren der einzelnen Recheneinheiten mittels bereitgestellter Steuerbefehle in Abhängigkeit der jeweils am geographischen Standort der jeweiligen Recheneinheiten vorhandenen Energiemenge und der vorhandenen Rechenkapazität der jeweiligen Recheneinheit, wobei die Recheneinheiten, nachdem sie adressiert wurden, die Ausführung der Steuerbefehle übernehmen.

2. Verfahren gemäß Anspruch 1, wobei die Recheneinheiten in dem verteilten Rechennetz derart adressiert werden, dass priorisierte Energiequellen die von den Recheneinheiten benötigte Energie bereitstellen.

3. Verfahren gemäß Anspruch 2, wobei erneuerbare Energiequellen priorisiert werden.

4. Verfahren gemäß Anspruch 3, wobei die erneuerbaren Energiequellen jeweils in Abhängigkeit von ihnen zugeordneten Wetterdaten priorisiert werden.

5. Verfahren gemäß einem der vorherigen Ansprüche, wobei die Energiequellen mindestens ein Element aus einer Menge von Energiequellen aufweisen, die Menge umfassend einen Batteriespeicher, einen Akkumulator, ein Notstromaggregat, eine Photovoltaik-Anlage, eine Windenergieanlage, eine Wasserkraftanlage, ein mit fossilen Energieträgern betriebenes Kraftwerk und ein mit Kernbrennstoffen betriebenes Kraftwerk.

6. Verfahren gemäß einem der vorherigen Ansprüche, wobei die benötigte Rechenkapazität der Steuerbefehle mit in den einzelnen Recheneinheiten vorhandener Rechenkapazität verglichen wird und nur die Recheneinheiten adressiert werden, die ausreichend Rechenkapazität zur Abarbeitung der Steuerbefehle aufweisen.

7. Verfahren gemäß einem der vorherigen Ansprüche, wobei die Steuerbefehle derart aufgeteilt werden, dass mehrere Recheneinheiten diese verteilt abarbeiten.

8. Verfahren gemäß einem der vorherigen Ansprüche, wobei Ortsdaten der Recheneinheiten bei der Entscheidung zu deren Adressierung verwendet werden.

9. Verfahren gemäß einem der vorherigen Ansprüche, wobei bei die Adressierung der Recheneinheiten in Abhängigkeit von Netzwerkparametern des verteilten Rechennetzes erfolgt.

10. Verfahren gemäß einem der vorherigen Ansprüche, wobei das Rechennetz ein Telekommunikationsfestnetz oder ein Mobilfunknetz aufweist.

11. Verfahren gemäß einem der vorherigen Ansprüche, wobei eine Recheneinheit als eine Einheit aus einer Menge von Einheiten vorliegt, die Menge aufweisend einen Computer, ein Rechenzentrum, einen Cluster, mindestens einen Schaltkreis, ein mobiles Endgerät, ein Bordgerät eines Fahrzeugs und ein Smart-Home-Gerät.

12. Verfahren gemäß einem der vorherigen Ansprüche, wobei eine in dem Rechennetz nicht verwendete Energiemenge mindestens einer Energiesenke aus einer Gruppe zugeführt wird, die Gruppe aufweisend einen Batteriespeicher, einen Akkumulator und einen Endverbraucher.

13. Vorrichtung zum energieeffizienten Auslasten von Recheneinheiten an verschiedenen geographischen Standorten in einem verteilten Rechennetz, aufweisend:
- eine Sensoreinheit eingerichtet zum Bestimmen jeweils einer an das Rechennetz bereitgestellten Energiemenge von Energiequellen, durch die das Rechennetz versorgt wird, wobei mehrere Energiequellen zum Bereitstellen der Energiemenge zusammenwirken;
- eine Messeinheit eingerichtet zum Bestimmen jeweils einer momentan vorhandenen Rechenkapazität der Recheneinheiten; und
- eine Adressierungseinheit eingerichtet zum Adressieren der einzelnen Recheneinheiten mittels bereitgestellter Steuerbefehle in Abhängigkeit der jeweils am geographischen Standort der jeweiligen Recheneinheiten vorhandenen Energiemenge und der vorhandenen Rechenkapazität der jeweiligen Recheneinheit, wobei die Recheneinheiten, nachdem sie adressiert wurden, die Ausführung der Steuerbefehle übernehmen.

14. System zum energieeffizienten Auslasten von Recheneinheiten in einem verteilten Rechennetz mit mindestens einer Vorrichtung gemäß Anspruch 13.

15. Computerprogramm mit Steuerbefehlen zur Durchführung eines Verfahrens gemäß einem der Ansprüche 1 bis 12.
